(19) Europäisches Patentamt
European Patent Office
Office européen des brevets

(11) Veröffentlichungsnummer: **0 167 894**
**B1**

(12) # EUROPÄISCHE PATENTSCHRIFT

(45) Veröffentlichungstag der Patentschrift: **14.09.88**

(51) Int. Cl.[4]: **C 07 F 9/58**, A 01 N 57/08

(21) Anmeldenummer: **85107544.0**

(22) Anmeldetag: **19.06.85**

(54) **Phosphorsäureester.**

(30) Priorität: **27.06.84 DE 3423639**

(43) Veröffentlichungstag der Anmeldung: **15.01.86 Patentblatt 86/3**

(45) Bekanntmachung des Hinweises auf die Patenterteilung: **14.09.88 Patentblatt 88/37**

(84) Benannte Vertragsstaaten: **BE CH DE FR GB IT LI NL**

(56) Entgegenhaltungen:
**US - A - 3 244 586**
**US - A - 3 743 648**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Riebel, Hans-Jochem, Dr., In der Beeck 92, D-5600 Wuppertal 1 (DE)**
Erfinder: **Homeyer, Bernhard, Dr., Obere Strasse 28, D-5090 Leverkusen 3 (DE)**
Erfinder: **Becker, Benedikt, Dr., Metzkausener Strasse 14, D-4020 Mettman (DE)**
Erfinder: **Behrenz, Wolfgang, Dr., Untergründemich 14, D-5063 Overath (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 167 894 B1

**Beschreibung**

Die Erfindung betrifft neue Phosphorsäureester, ein Verfahren zu ihrer Herstellung und ihre Verwendung als Schädlingsbekämpfungsmittel, insbesondere als Insektizide und Nematizide.

Es ist bekannt, dass bestimmte O-Pryridyl(thiono)phosphorsäureester, wie z.B. O,O-Diethyl-O-(3,5-dichlor-pyrid-2-yl)-phosphorsäureester und O,O-Diethyl-O-(3,5-dichlor-pyrid-2-yl)-thionophosphorsäureester pestizid wirksam sind (vergl. US-PS 3244586). Aus der US-PS 3743648 ist auch die insektizide Wirkung solcher Phosphorsäurederivate bekannt, welche im Pyridylring Trifluormethyl enthalten (z.B. der O,O-Diethyl-O-(6-trifluormethylpyrid-2-yl)-thionophosphorsäureester). Die Wirkung dieser bekannten Verbindungen ist jedoch unter bestimmten Umständen, insbesondere bei niedrigen Wirkstoffkonzentrationen und Aufwandmengen nicht immer voll zufriedenstellend.

Es wurden nun neue Phosphorsäureester der Formel (I),

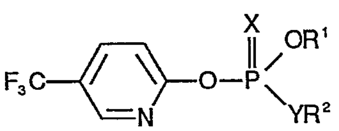

(I)

in welcher
Y für Sauerstoff, Schwefel oder eine -NR-Gruppe steht, worin
R für Wasserstoff oder Alkyl steht,
X für Sauerstoff oder Schwefel steht und
$R^1$ und $R^2$ gleich oder verschieden sind und für Alkyl stehen, gefunden.

Man erhält die neuen Phosphorsäureester der Formel (I), wenn man 2-Hydroxy-5-trifluormethyl-pyridin der Formel (II)

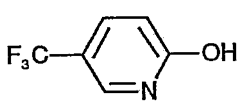

(II)

oder die entsprechenden Alkalimetall-, Erdalkalimetall- oder Ammoniumsalze mit Halogeniden der Formel (III),

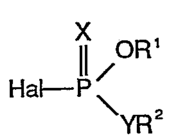

(III)

in welcher
$R^1$, $R^2$, X und Y die oben angegebenen Bedeutungen haben und Hal für Halogen (vorzugsweise Chlor oder Brom) steht, gegebenenfalls in Gegenwart eines Säureakzeptors und gegebenenfalls in Gegenwart eines Verdünnungsmittels umsetzt.

Die neuen Phosphorsäureester der Formel (I) zeichnen sich durch hohe Wirksamkeit als Schädlingsbekämpfungsmittel, insbesondere durch ihre hervorragende insektizide und nematizide Wirkung aus.

Die Alkylreste R, $R^1$ und $R^2$ können verzweigt oder unverzweigt sein und enthalten vorzugsweise 1 bis 8, insbesondere 1 bis 6 und besonders bevorzugt 1 bis 4 Kohlenstoffatome. Beispielhaft seien genannt:

Methyl, Ethyl, n-Propyl, i-Propyl, n-Butyl, i-Butyl, sec.-Butyl oder tert.-Butyl.

X steht vorzugsweise für Schwefel.

Die Erfindung betrifft vorzugsweise Verbindungen der Formel (I), in welcher

Y für Sauerstoff, Schwefel oder eine -NR-Gruppe steht, worin
R für Wasserstoff oder Alkyl mit 1 bis 4 Kohlenstoffatomen steht,
X für Sauerstoff oder Schwefel steht und
$R^1$ und $R^2$ gleich oder verschieden sind und für Alkyl mit 1 bis 6 Kohlenstoffatomen stehen.

Ganz besonders bevorzugt sind die Verbindungen der Formel (I) in welcher,

Y für Sauerstoff, Schwefel oder eine -NR-Gruppe steht, worin
R für Wasserstoff, Methyl oder Ethyl steht,
X für Sauerstoff oder Schwefel steht und
$R^1$ und $R^2$ gleich oder verschieden sind und für Methyl, Ethyl, n-Propyl, i-Propyl, n-Butyl, i-Butyl, sec.-Butyl oder tert.-Butyl stehen.

Verbindungen der Formel (I), in welcher
Y für Sauerstoff, Schwefel oder eine -NR-Gruppe steht, worin
R für Wasserstoff steht,
X für Schwefel steht und
$R^1$ und $R^2$ gleich oder verschieden sind und für Methyl, Ethyl oder n-Propyl stehen, zeichnen sich durch eine besonders günstige Wirksamkeit aus.

Verwendet man beispielsweise für das erfindungsgemässe Verfahren als Ausgangsstoffe 2-Hydroxy-5-trifluormethylpyridin und O-Ethyl-S-n-propyl-dithiophosphorsäureesterchlorid, so kann die entsprechende Reaktion durch das folgende Formelschema skizziert werden:

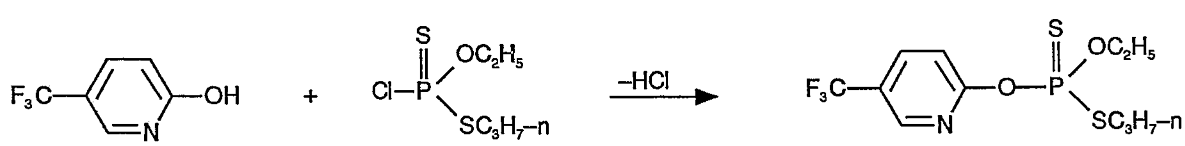


2-Hydroxy-5-trifluormethylpyridin bzw. die entsprechenden Salze sind durch die Formel (II) definiert. Die Alkali-, Erdalkalimetall- oder Ammoniumionen stehen vorzugsweise für Natrium-, Kalium-, Calcium- und Ammoniumionen.

Als Beispiele für die Ausgangsstoffe der Formel (II) seien genannt:

die Natrium-, Kalium-, Calcium- und Ammoniumsalze von 2-Hydroxy-5-trifluormethylpyridin.

Die Verbindungen der Formel (II) sind bekannte Verbindungen der organischen Chemie.

Die ebenfalls als Ausgangsstoffe einzusetzenden Halogenide sind durch die Formel (III) definiert. In dieser Formel stehen $R^1$, $R^2$, X und Y vorzugsweise für diejenigen Reste, welche bei der Definition in Formel (I) genannt wurden. Hal steht in dieser Formel vorzugsweise für Chlor oder Brom.

Als Beispiele für die Ausgangsstoffe der Formel (III) seien genannt:

Dimethoxy-, Diethoxy-, D-n-propoxy, Di-i-propoxy-, Di-n-butoxy, Di-i-butoxy-, Methoxyethoxy-, Methoxy-n-propoxy-, Methoxy-i-propoxy-, Methoxy-n-butoxy-, Methoxy-i-butoxy, Methoxy-sec.-butoxy-, Methoxy-tert.-butoxy, Ethoxy-n-propoxy-, Ethoxy-i-propoxy, Ethoxy-n-butoxy-, Ethoxy-i-butoxy-, Ethoxy-sec.-butoxy-, Ethoxy-tert.-butoxy-, n-Propoxy-i-propoxy-, n-Propoxy-n-butoxy-, n-Propoxy-i-butoxy-, n-Propoxy-sec.-butoxy-, n-Propoxy-tert.-butoxy-, i-Propoxy-n-butoxy-, i-Propoxy-i-butoxy-, n-Butoxy-i-butoxy-, n-Butoxy-sec.-butoxy-, n-butoxy-tert.-butoxy-(thiono)phosphorsäureester-chlorid bzw. -bromid;

Methoxy-methylthio-, Methoxy-ethylthio-, Methoxy-n-propyl-thio, Methoxy-i-propylthio-, Methoxy-n-butylthio-, Methoxy-i-butylthio-, Ethoxy-methylthio-, Ethoxy-ethylthio-, Ethoxy-n-propylthio-, Ethoxy-i-propylthio-, Ethoxy-n-butylthio-, Ethoxy-i-butylthio-, Ethoxy-sec.-butylthio-, n-Propoxy-methylthio-, n-Propoxy-ethylthio-, n-Propoxy-n-propylthio-, n-Propoxy-i-propylthio-, n-Propoxy-n-butylthio-, n-Propoxy-i-butylthio-, i-Propoxy-methylthio-, i-Propoxy-ethylthio-, i-Propoxy-n-propylthio-, i-Propoxy-i-propylthio-, i-Propoxy-n-butylthio-, i-Propoxy-i-butylthio-, n-Butoxy-methylthio-, n-Butoxy-ethylthio-, n-Butoxy-n-propylthio-, n-Butoxy-i-propylthio-, n-Butoxy-n-butylthio-, n-Butoxy-i-butylthio-, i-Butoxy-methylthio-, i-Butoxy-ethylthio-, i-Butoxy-n-propylthio-, i-Butoxy-i-propylthio-, i-Butoxy-n-butylthio-, i-Butoxy-i-butylthio-(thiono)phosphorsäureester-chlorid bzw. -bromid;

Methoxy-(di)methylamino-, Methoxy-(di)ethyl amino-, Methoxy-(di)n-propylamino-, Methoxy-(di)i-propylamino-, Methoxy-(di)-n-butylamino-, Methoxy-(di)i-butylamino-, Ethoxy-(di)methyl-amino-, Ethoxy-(di)n-propylamino, Ethoxy-(di)i-propylamino-, Ethoxy-(di)n-butylamino-, Ethoxy-(di)i-butylamino-, n-Propoxy-(di)methylamino-, n-Propoxy-(di)ethylamino, n-Propoxy-(di)n-propylamino, n-Propoxy-(di)i-propylamino, n-Propoxy(di)n-butylamino-, n-Propoxy-(di)i-butylamino-, i-Propoxy-(di)methylamino-, i-Propoxy-(di)ethylamino-, i-Propoxy-(di)-n-propylamino-, i-Propoxy-(di)i-propylamino-, i-Propoxy-(di)-n-butylamino-, i-Propoxy-(di)i-butylamino-, n-Butoxy-(di)-methylamino-, n-Butoxy-(di)ethylamino-, n-Butoxy-(di)n-propylamino-, n-Butoxy-(di)i-propylamino-, n-Butoxy-(di)n-butyl-amino-, n-Butoxy-(di)i-butylamino-, i-Butoxy-(di)methylamino-, i-Butoxy-(di)ethylamino-, i-Butoxy-(di)n-propylamino-, i-Butoxy-(di)i-propylamino-, i-Butoxy-(di)n-butylamino-, i-Butoxy(di)i-butylamino-, sec.-Butoxy-(di)methyl amino-, sec.-Butoxy-(di)ethylamino-, sec.-Butoxy-(di)n-propylamino-, sec.-Butoxy-(di)i-propylamino-, sec.-Butoxy-(di)i-butylamino-, tert.-Butoxy-(di)methylamino-, tert.-Butoxy-(di)ethylamino-, tert.-Butoxy-(di)n-propylamino-, tert.-Butoxy-(di)n-butylamino-(thiono)phosphorsäureester-chlorid bzw. -bromid.

Die Verbindungen der Formel (III) sind bekannt und/oder können nach allgemein bekannten Verfahren und Methoden hergestellt werden (vergl. z.B. Methoden der organischen Chemie (Houben-Weyl-Müller), 4. Aufl., Band 12/1 (1963), S. 415–420 und S. 560–563; Band 12/2 (1964), S. 274–292, S. 405–408 und S. 607–618, S. 621–622 und S. 755–757; Thieme Verlag Stuttgart).

Das erfindungsgemässe Verfahren zur Herstellung der neuen Phosphorsäureester der Formel (I) wird bevorzugt unter Verwendung von Verdünnungsmitteln durchgeführt. Als Verdünnungsmittel kommen praktisch alle inerten organischen Lösungsmittel in Frage.

Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glycoldimethylether und Diglycoldimethylether, Tetrahydrofuran und Dioxan, Ketone, wie Aceton, Methylethyl-, Methylisopropyl- und Methylisobutylketon, Ester, wie Essigsäuremethylester und -ethylester, Nitrile, wie z.B. Acetonitril und Propionitril, Amide, wie z.B. Dimethylformamid, Dimethylacetamid und N-Methylpyrrolidon, sowie Dimethylsulfoxid, Tetramethylensulfon und Hexamethylphosphorsäuretriamid.

Das Verfahren kann gegebenenfalls in Gegenwart von Säureakzeptoren durchgeführt werden. Als Säureakzeptoren können alle üblichen Säurebindemittel Verwendung finden. Besonders bewährt haben sich Alkalicarbonate und -alkoholate, wie Natrium- und Kaliumcarbonat, Natrium- und Kaliummethylat bzw. -ethylat, ferner aliphatische, aromatische oder heterocyclische Amine, beispielsweise Triethylamin, Trimethylamin, Dimethylanilin, Dimethylbenzylamin und Pyridin.

Das erfindungsgemässe Verfahren wird im allgemeinen bei Temperaturen zwischen 0°C und 120°C durchgeführt. Bevorzugt wird der Bereich zwischen 20°C und 100°C. Die Umsetzungen werden im allgemeinen bei Normaldruck durchgeführt.

Zur Durchführung des erfindungsgemässen

Verfahrens werden die Ausgangsstoffe (II) und (III) gewöhnlich annähernd in äquimolaren Mengen eingesetzt. Ein Überschuss der einen oder anderen Reaktionskomponente bringt keine wesentlichen Vorteile.

Die Umsetzungen werden im allgemeinen in einem geeigneten Verdünnungsmittel und gegebenenfalls in Gegenwart eines Säureakzeptors durchgeführt.

Die Aufarbeitung der erfindungsgemäss erhältlichen Verbindungen geschieht nach üblichen Methoden. Die neuen Verbindungen fallen zum Teil in Form von Ölen an, die sich zum Teil nicht unzersetzt destillieren lassen, jedoch durch sogenanntes «Andestillieren», d.h. längeres Erhitzen unter vermindertem Druck auf mässig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten und Methoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Procellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis,

Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus' piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp.

Aus der Ordnung der Arachnida z.B. Scorpio maurus, Latrodectus mactans.

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Besonders hervorzuheben ist die gute Wirkung

gegen Nematoden und Bodeninsekten, weiterhin ist eine gute systemische, insbesondere wurzelsystemische, Wirkung zu beobachten.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthalinc, chlorierte Aromaten oder chlorierte aliphatische Kohlenwasserstoffe, wie Chlorbenzole, Chloräthylene oder Methylenchlorid, aliphatische Kohlenwasserstoffe, die Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweisshydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemässen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemässen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.% Wirkstoff, vorzugsweise zwischen 0,0001 und 1 Gew.% liegen.

Die Anwendung geschieht in einer den Anwendungsformen angepassten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Herstellung der erfindungsgemässen Verbindungen soll durch die folgenden Herstellungsbeispiele erläutert werden:

Beispiel 1

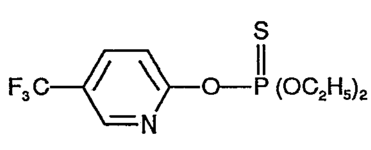

In einer Suspension von 8,2 g (0,05 Mol) 2-Hydroxy-5-trifluor-methylpyridin und 8 g (0,058 Mol) Kaliumcarbonat in 80 ml Acetonitril wurden bei 20°C 9,4 g (0,05 Mol) O,O-Diehtyl-thionophosphorsäureesterchlorid getropft. Anschliessend wurde das Gemisch 2 Stunden bei 70°C gerührt, abgekühlt und filtriert. Das Filtrat wurde eingeengt und andestilliert.

Man erhielt 15 g (96% der Theorie) O,O-Diehtyl-O-(5-tri-fluormethylpyrid-2-yl)-thionophosphorsäureester in Form eines gelben Öls mit einem Brechungsindex $n_D^{22}$ =1,4718.

Analog Beispiel (1) wurden die folgenden Verbindungen der Formel (1) hergestellt.

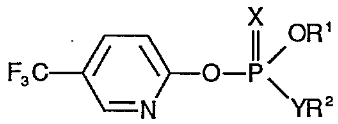

(I)

| Beispiel Nr. | X | Y | $R^1$ | $R^2$ | Brechungsindex |
|---|---|---|---|---|---|
| 2 | S | S | $C_2H_5$ | $n\text{-}C_3H_7$ | $n_D^{22}$ = 1,5111 |
| 3 | S | NH | $C_2H_5$ | $CH_3$ | $n_D^{22}$ = 1,5004 |
| 4 | O | S | $C_2H_5$ | $n\text{-}C_3H_7$ | Öl |
| 5 | S | O | $C_2H_5$ | $i\text{-}C_3H_7$ | $n_D^{22}$ = 1,4701 |

Beispiel A

$LT_{100}$-Test für Dipteren

Testtiere: Musca Domestica (resistent)

Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschliessend gibt man etwa 25 Testtiere in die Petrischale und bedeckt sie mit einem Glasdeckel.

Der Zustand der Testtiere wird laufend kontrolliert. Es wird diejenige Zeit ermittelt, welche für einen 100%igen knock-down-Effekt notwendig ist.

Bei diesem Test zeigte z.B. die Verbindung des Herstellungsbeispiels (1) bei einer Wirkstoffkonzentration von 0,002% eine 100%ige Wirkung nach 210 Minuten.

Beispiel B

Drosophila-Test

Lösungsmittel: 3 Gewichtsteile Aceton

Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

1 $cm^3$ der Wirkstoffzubereitung wird auf eine Filterpapierscheibe (7 cm Durchmesser) aufpipettiert. Man legt diese nass auf die Öffnung eines Glasgefässes, in dem sich 50 Taufliegen (Drosophila melanogaster) befinden und bedeckt es mit einer Glasplatte.

Nach der gewünschten Zeit bestimmt man die Abtötung in %. Dabei bedeutet 100%, dass alle Fliegen abgetötet wurden; 0% bedeutet, dass keine Fliegen abgetötet wurden.

Bei diesem Test zeigte z.B. bei einer Wirkstoffkonzentration von 0,001% die Verbindung des Herstellungsbeispiels (1) nach 1 Tag eine Abtötung von 100%.

Beispiel C

Plutella-Test

Lösungsmittel: 3 Gewichtsteile Aceton

Emulgator: 1 Gewichtsteil Alkylarylpolyglykolether

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella maculipennis) besetzt, solange die Blätter noch feucht sind.

Nach der gewünschten Zeit wird die Abtötung in % bestimmt. Dabei bedeuten 100%, dass alle Raupen abgetötet wurden; 0% bedeutet, dass keine Raupen abgetötet wurden.

Bei diesem Test zeigte z.B. bei einer Wirkstoffkonzentration von 0,01% die Verbindung des Herstellungsbeispiels (1) nach 3 Tagen eine Abtötung von 100%.

Beispiel D

Grenzkonzentrations-Test/Bodeninsekten

Testinsekt: Phorbia antiqua-Maden im Boden

Lösungsmittel: 3 Gewichtsteile Aceton

Emulgator: 1 Gewichtsteil Alkylarylpolyglykolether

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (=mg/l) angegeben wird. Man füllt den Boden in Töpfe und lässt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100%, wenn alle Testinsekten abgetötet worden sind, er ist 0%, wenn noch genau so viele Testinsekten leben wie bei der unbehandelten Kontrolle.

Bei diesem Test zeigten z.B. bei einer Wirkstoffkonzentration von 20 ppm die Verbindungen der Herstellungsbeispiele (1), (2) und (3) eine Abtötung von 100%.

Beispiel E

Grenzkonzentrations-Test/Wurzelsystemische Wirkung

Testinsekt: Myzus persicae

Lösungsmittel: 3 Gewichtsteile Aceton

Emulgator: 1 Gewichtsteil Alkylarylpolyglykolether

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (=mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschliesslich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100%, wenn alle Testtiere abgetötet sind und 0%, wenn noch genau so viele Testinsekten leben wie bei der unbehandelten Kontrolle.

Bei diesem Test zeigten z.B. bei einer Wirkstoffkonzentration von 20 ppm die Verbindungen der Herstellungsbeispiele (1) und (3) eine Abtötung von 95% bzw. 100%.

Beispiel F

Grenzkonzentrations-Test/Nematoden

Testnematode: Meloidogyne incognita

Lösungsmittel: 3 Gewichtsteile Aceton

Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27°C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100%, wenn der Befall vollständig vermieden wird, er ist 0%, wenn der Befall genau so hoch ist wie bei den Kontrollpflanzen in unbehandeltem, aber in gleicher Weise verseuchtem Boden.

Bei diesem Test zeigten z.B. bei einer Wirkstoffkonzentration von 20 ppm die Verbindungen der Herstellungsbeispiele (1), (2) und (3) eine Abtötung von 100%.

Beispiel G

Grenzkonzentrations-Test

Testnematode: Globodera rostochiensis

Lösungsmittel: 3 Gewichtsteile Aceton

Emulgator: 1 Gewichtsteil Alkylarylpolyglykolether

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wikrstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, pflanzt Kartoffeln ein und hält die Töpfe bei einer Gewächshaus-Temperatur von 18°C.

Nach sechs Wochen werden die Kartoffelwurzeln auf Zysten untersucht und der Wirkungsgrad des Wirkstoffs in % bestimmt. Der Wirkungsgrad ist 100%, wenn der Befall vollständig vermieden wird, er ist 0%, wenn der Befall genau so hoch ist wie bei den Kontrollpflanzen in unbehandeltem, aber in gleicher Weise verseuchtem Boden.

Bei diesem Test zeigten z.B. bei einer Wirkstoffkonzentration von 20 ppm die Verbindungen der Herstellungsbeispiele (1), (2) und (3) eine Abtötung von 100%.

**Patentansprüche**

1. Phosphorsäureester der Formel (I)

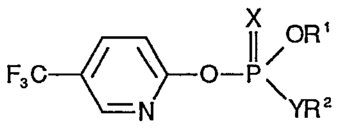

(I)

in welcher

Y für Sauerstoff, Schwefel oder eine -NR-Gruppe steht, worin

R für Wasserstoff oder Alkyl steht,

X für Sauerstoff oder Schwefel steht und

$R^1$ und $R^2$ gleich oder verschieden sind und für Alkyl stehen

2. Verbindungen gemäss Anspruch 1, wobei

Y für Sauerstoff, Schwefel oder eine -NR-Gruppe steht, worin

R für Wasserstoff oder Alkyl mit 1 bis 4 Kohlenstoffatomen steht,
X für Sauerstoff oder Schwefel steht und
$R^1$ und $R^2$ gleich oder verschieden sind und für Alkyl mit 1 bis 6 Kohlenstoffatomen stehen.

3. Verbindungen gemäss Anspruch 1, wobei
Y für Sauerstoff, Schwefel oder eine -NR-Gruppe steht, worin
R für Wasserstoff, Methyl oder Ethyl steht,
X für Sauerstoff oder Schwefel steht und
$R^1$ und $R^2$ gleich oder verschieden sind und für Methyl, Ethyl, n-Propyl, i-Propyl, n-Butyl, i-Butyl, sec.-Butyl oder tert.-Butyl stehen.

4. Verbindungen gemäss Anspruch 1, wobei
Y für Sauerstoff, Schwefel oder eine -NR-Gruppe steht, worin
R für Wasserstoff steht,
X für Schwefel steht und
$R^1$ und $R^2$ gleich oder verschieden sind und für Methyl, Ethyl oder n-Propyl stehen

5. Verbindungen gemäss Anspruch 1, wobei
(a) X für Schwefel, Y für Sauerstoff und $R^1$ und $R^2$ für Ethyl stehen oder
(b) X für Schwefel, Y für Schwefel, $R^1$ für Ethyl und $R^2$ für n-Propyl stehen oder
(c) X für Schwefel, Y für die Gruppe NH, $R^1$ für Ethyl und $R^2$ für Methyl stehen.

6. Verfahren zur Herstellung der Phosphorsäureester der Formel (I),

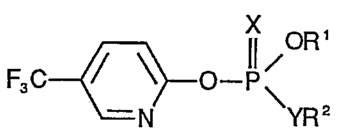 (I)

in welcher
Y für Sauerstoff, Schwefel oder eine -NR-Gruppe steht, worin
R für Wasserstoff oder Alkyl steht,
X für Sauerstoff oder Schwefel steht und
$R^1$ und $R^2$ gleich oder verschieden sind und für Alkyl stehen dadurch gekennzeichnet, dass man 2-Hydroxy-5-trifluormethyl-pyridin der Formel (II)

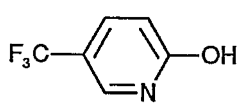 (II)

oder die entsprechenden Alkalimetall-, Erdalkalimetall- oder Ammoniumsalze mit Halogeniden der Formel (III),

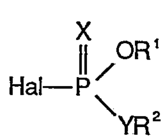 (III)

in welcher
$R^1$, $R^2$, X und Y die oben angegebenen Bedeutungen haben und
Hal für Halogen (vorzugsweise Chlor oder Brom) steht, gegebenenfalls in Gegenwart eines Säureakzeptors und gegebenenfalls in Gegenwart eines Verdünnungsmittels umsetzt.

7. Schädlingsbekämpfungsmittel, gekennzeichnet durch einen Gehalt an mindestens einer Verbindung der Formel (I) gemäss Anspruch 1 oder 6.

8. Verwendung von Verbindungen der Formel (I) gemäss Anspruch 1 oder 6 zur Bekämpfung von Schädlingen, insbesondere von Insekten und Nematoden.

9. Verfahren zur Bekämpfung von Schädlingen, dadurch gekennzeichnet, dass man Verbindungen der Formel (I) gemäss Anspruch 1 oder 6 auf die Schädlinge, vorzugsweise Insekten und Nematoden oder ihren Lebensraum einwirken lässt.

10. Verfahren zur Herstellung von Schädlingsbekämpfungsmitteln, dadurch gekennzeichnet, dass man Verbindungen der Formel (I) gemäss Anspruch 1 oder 6 mit Streckmitteln und/oder oberflächenaktiven Mitteln vermischt.

## Claims

1. Phosphoric acid esters of the formula (I)

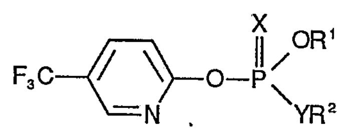 (I)

in which
Y represents oxigen, sulphur or a -NR- group, wherein
R represents hydrogen or alkyl,
X represents oxygen or sulphur and
$R^1$ and $R^2$ are identical or different and represent alkyl.

2. Compounds according to Claim 1, wherein
Y represents oxygen, sulphur or a -NR- group, wherein
R represents hydrogen or alkyl with 1 to 4 carbon atoms,
X respresents oxygen or sulphur and
$R^1$ and $R^2$ are identical or different and represent alkyl with 1 to 6 carbon atoms.

3. Compounds according to Claim 1, wherein
Y represents oxygen, sulphur or a -NR- group, wherein
R represents hydrogen, methyl or ethyl,
X represents oxygen or sulphur and
$R^1$ and $R^2$ are identical or different and represent methyl, ethyl, n-propyl, i-propyl, n-butyl, i-butyl, sec.-butyl or tert.-butyl.

4. Compounds according to Claim 1, wherein
Y represents oxygen, sulphur or a -NR- group, wherein
R represents hydrogen,
X represents sulphur and
$R^1$ and $R^2$ are identical or different and represent methyl, ethyl or n-propyl.

5. Compounds according to Claim 1, wherein
(a) X represents sulphur, Y represents oxygen and $R^1$ and $R^2$ represent ethyl, or
(b) X represents sulphur, Y represents sulphur, $R^1$ represents ethyl and $R^2$ represents n-propyl, or

(c) X represents sulphur, Y represents the group NH, $R^1$ represents ethyl and $R^2$ represents methyl.

6. Process for the preparation of the phosphoric acid esters of the formula (I)

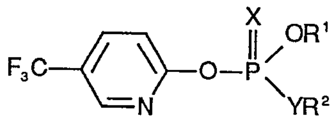

(I)

in which

Y represents oxygen, sulphur or a -NR- group, wherein

R represents hydrogen or alkyl,

X represents oxygen or sulphur and

$R^1$ and $R^2$ are identical or different and represent alkyl, characterised in that 2-hydroxy-5-trifluoromethyl-pyridine of the formula (II)

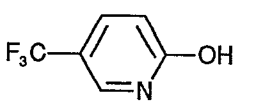

(II)

or the corresponding alkali metal, alkaline earth metal or ammonium salts are reacted with halides of the formula (III)

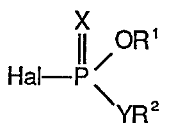

(III)

in which

$R^1$, $R^2$, X and Y have the abovementioned meanings and

Hal represents halogen (preferably chlorine or bromine),

if appropriate in the presence of an acid acceptor and if appropriate in the presence of a diluent.

7. Agents for combating pests, characterised in that they contain at least one compounds of the formula (I) according to Claim 1 or 6.

8. Use of compounds of the formula (I) according to Claim 1 or 6 for combating pests, in particular insects and nematodes.

9. Method of combating pests, characterised in that compounds of the formula (I) according to Claim 1 or 6 are allowed to act on the pests, preferably insects and nematodes, or their environment.

10. Process for the preparation of agents for combating pests, characterised in that compounds of the formula (I) according to Claim 1 or 6 are mixed with extenders and/or surface-active agents.

**Revendications**

1. Esters d'acide phosphorique de formule (I)

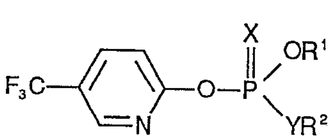

(I)

dans laquelle

Y représente oxygène, soufre, ou un groupe -NR-, où

R représente hydrogène ou alkyle,

X représente oxygène ou soufre

$R^1$ et $R^2$ sont identiques ou différents et représentent alkyle

2. Composés selon la revendication 1, où

Y représente oxygène, soufre ou un groupe -NR- où

R représente hydrogène ou alkyle avec 1 à 4 atomes de carbone,

X représente oxygène ou soufre et

$R^1$ et $R^2$ sont identiques ou différents et représentent alkyle avec 1 à 4 atomes de carbone.

3. Composés selon la revendication 1, où

Y représente oxygène, soufre ou un groupe -NR-, où

R représente hydrogène, méthyle ou éthyle,

X représente oxygène ou soufre et

$R^1$ et $R^2$ sont identiques ou différents et représentent méthyle, éthyle, n-propyle, i-propyle, n-butyle, i-butyle, butyle sec. ou butyle tert.

4. Composés selon la revendication 1, où

Y représente oxygène, soufre, ou un groupe -NR-, où

R représente hydrogène,

X représente soufre et

$R^1$ et $R^2$ sont identiques ou différents et représentent méthyle, éthyle ou n-propyl

5. Composés selon la revendication 1, où

(a) X représente soufre, Y oxygène et $R^1$ et $R^2$ éthyle, ou

(b) X représente soufre, Y soufre, $R^1$ éthyle et $R^2$ n-propyle, ou

(c) X représente soufre, Y le groupe NH, $R^1$ éthyle et $R^2$ méthyle.

6. Procédé de fabrication d'un ester d'acide phosphorique de formule (I),

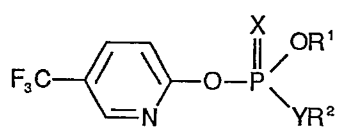

(I)

dans laquelle

Y représente oxygène, soufre, ou un groupe -NR-, où

R représente hydrogène ou alkyle,

X représente oxygène ou soufre et

$R^1$ et $R^2$ sont identiques ou différents et représentent alkyle, caractérisé en ce que l'on fait réagir la 2-hydroxy-5-trifluorméthyl-pyridine de formule (II)

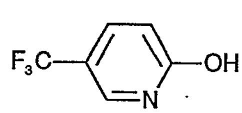

(II)

ou les sels correspondants de métaux alcalins, alcalino-terreux ou d'ammonium avec des halogénures de formule (III)

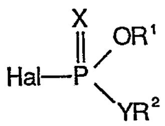

(III)

dans laquelle
$R^1$, $R^2$, X et Y ont les significations indiquées ci-dessus et
Hal représente halogène (de préférence chlore ou brome), éventuellement en présence d'un accepteur d'acide et éventuellement en présence d'un diluant.

7. Agent de lutte contre les parasites, caractérisé par le fait qu'il contient au moins un composé de formule (I) selon la revendication 1 ou 6.

8. Utilisation des composés de la formule (I) selon la revendication 1 ou 6 pour la lutte contre les parasites, en particulier insectes et nématodes.

9. Procédé de lutte contre les parasites caractérisé par le fait que l'on fait agir des composés de formule (I) selon la revendication 1 ou 6 sur les parasites, préférentiellement des insectes et nématodes, ou sur leur habitat.

10. Procédé de fabrication d'agents de lutte contre les parasites, caractérisé par le fait que l'on mélange des composés de formule (I) selon la revendication 1 ou 6 avec des extendeurs ou diluants et/ou des agents tensio-actifs.